Europäisches Patentamt

European Patent Office

Office européen des brevets

(19)

(11) **EP 0 710 807 A2**

(12) **EUROPÄISCHE PATENTANMELDUNG**

(43) Veröffentlichungstag:
08.05.1996 Patentblatt 1996/19

(51) Int. Cl.⁶: **F25B 31/02**, F04B 37/18

(21) Anmeldenummer: 95117453.1

(22) Anmeldetag: 06.11.1995

(84) Benannte Vertragsstaaten:
AT BE CH DE DK ES FR GB IE IT LI LU NL SE

(30) Priorität: 07.11.1994 DE 4439780

(71) Anmelder: SEP GESELLSCHAFT FÜR
TECHNISCHE STUDIEN
ENTWICKLUNG PLANUNG mbH
D-85737 Ismaning (DE)

(72) Erfinder:
• Clemens, Herbert
  D-80639 München (DE)
• Plantikow, Ulrich, Dr.
  D-81373 München (DE)
• Wüsthoff, Detlef
  D-81549 München (DE)

(74) Vertreter: KUHNEN, WACKER & PARTNER
Alois-Steinecker-Strasse 22
D-85354 Freising (DE)

(54) **Kompressor-Kältemaschine**

(57)     Es wird eine Kompressor-Kältemaschine mit Ammoniak als Kältemittel bereitgestellt, bei der das Motor-Verdichter-Aggregat (10) in einer halbhermetischen oder hermetischen Kapselung (11) angeordnet ist. Die der Ammoniak-Atmosphäre ausgesetzten Teile des Motor-Verdichter-Aggregat (10) sind aus gegen Ammoniak beständigen Materialien gefertigt. Innerhalb der hermetischen bzw. halbhermetischen Kapselung ist der Elektromotor (14) so angeordnet, daß er im wesentlichen lediglich einer ruhenden Ammoniak-Atmosphäre ausgesetzt ist. Damit wird im Vergleich zu strömendem Ammoniak eine geringere Korrosivität erreicht.

Fig. 1

**Beschreibung**

Die Erfindung betrifft eine Kompressor-Kältemaschine mit Ammoniak als Kältemittel.

Derartige Ammoniak-Verdichter-Kälteanlagen sind beispielsweise aus dem Fachbuch "Ammoniak-Verdichter-Anlagen", Band 1: Ausrüstungen, Berechnung und Projektierung, Hans Dölz/Peter Otto (Herausgeber), Verlag C.F. Müller, Karlsruhe, sowie aus dem Handbuch der Kältetechnik von Plank bekannt. Aus dem Handbuch der Kältetechnik von Plank sind auch Kältemaschinen mit dem Kältemittel Ammoniak, Kolbenkompressoren und getrennten Solekreisläufen bekannt.

Diese bekannten Ammoniak-Kältemaschinen bzw. -Anlagen sind als sogenannte offene Anlagen konzipiert, d. h. der Verdichter in dem das Kältemittel Ammoniak strömt ist gegen die Umgebung mit mittels einer Wellendichtung (Antriebswelle zwischen Motor und Verdichter) abgedichtet. Da über derartige Wellendichtungen immer kleinere Ammoniakmengen entweichen und selbst kleinste Mengen Ammoniak zu Geruchsbelästigungen führen, werden diese bekannten Ammoniakkältemaschinen bisher nur im Freien oder in Räumen verwendet, an denen die Geruchsbelästigung toleriert werden kann.

Aus der DE-PS 859 897 ist eine Kältemaschine bekannt, die ein hermetisch gekapseltes Motor-Verdichter-Aggregat aufweist. Aus dem Artikel "Kälteaggregate mit halbhermetischen Verdichtern und zwei Drehzahlen" in der Zeitschrift "Klima-Kälte-Heizung", 1/1980, Seiten 7 - 9, ist eine Kältemaschine mit halbhermetischem Motor-Verdichter-Aggregat bekannt.

Aus der DE-PS 26 43 622 ist eine Kältemaschine mit einem Schraubenverdichter mit einer sogenannten Economizer-Schaltung bekannt. Hierbei weist der Schraubenverdichter zwei Sauganschlüsse auf, die Kältemitteldampf auf unterschiedlichen Druck- und Temperaturniveaus ansaugen und verdichten.

Vergleichbare Kälteanlagen sind auch aus der DE-OS 24 47 116 sowie der DE-OS 36 06 067 bekannt.

Aufgabe der vorliegenden Erfindung ist es Kältemaschinen mit Ammoniak als Kältemittel derart weiterzubilden, daß keine Geruchsbelästigung durch Ammoniak auftritt.

Die Lösung dieser Aufgabe erfolgt durch die Merkmale des Anspruchs 1.

Durch die halbhermetische Kapselung des Motor-Verdichter-Aggregats wird eine Geruchsbelästigung durch aus dem Motor-Verdichter-Aggregat entweichendes Ammoniak ausgeschlossen. Durch die Anordnung des Elektromotors innerhalb der halbhermetischen Kapselung außerhalb des Ammoniakstromes wird erreicht, daß der Elektromotor nur einer im wesentlichen ruhenden Ammoniakatmosphäre ausgesetzt ist. Der Kältemittel- bzw. Ammoniakdampf wird daher nicht durch den Motor geführt, auch wenn der Motor für das Kältemittel zugänglich ist. Der Motorinnenraum bildet für das Kältemittelgas lediglich eine Art Druckausgleichsbehälter. Durch diese Maßnahme wird erreicht, daß der Aufwand bzw. die Mehrkosten für einen ammoniakbeständigen Elektromotor wirtschaftlich vertretbar werden und gleichzeitig auch die Lebensdauer des ammoniakbeständigen Elektromotors wirtschaftliche vertretbar bleibt.

Durch den Einbau von Motor und Verdichter in einem gemeinsamen Gehäuse kann auch eine vollhermetische Kälteanlage realisiert werden.

Durch die halbhermetische Kapselung können aber Reparaturen, die selbst bei einer ruhenden Ammoniakatmosphäre durch Korrosion an dem ammoniakbeständigen Elektromotor notwendig werden können, kostengünstiger ausgeführt werden.

Die Verwendung von Ammoniak als Kältemittel ist vorteilhaft, weil es sich hierbei um ein sehr preiswertes Kältemittel mit hervorragenden thermodynamischen Eigenschaften handelt. Darüberhinaus zeigt Ammoniak nicht die schädlichen Auswirkungen auf die Atmosphäre (Treibhauseffekt, Ozonzerstörung) der bisher verwendeten Kältemittel FCKW, FKW etc. Zur Dichtung mit O-Ringen werden dauerelastische, gegen Ammoniak und Öl beständige Materialien benötigt. Zur Zeit erfüllen nur die extrem teuren Perfluorelastomere diese Anforderungen. Derartige O-Ringe sind z. B. und dem Markennamen Kalrez (DuPont oder Simriz (Freudenberg) erhältlich. Von den preiswerten Dichtungsmaterialien ist nur Chloroutadienkautschuk (CR) bedingt geeignet, sofern Kältemittelöle mit einem niedrigen Elastomer-Verträglichts-Index (elastomer compatibility index) gemäß ISO 6072 eingesetzt werden können. Dieses Material ist zwar gegen Ammoniak beständig, quillt jedoch in Kontakt mit Mineralölen und enthält chemisch angreifbare Doppelbindungen.

Durch die Anordnung von Verdichter und Antriebseinheit in einer halbhermetischen Kapselung kann Ammoniak als Kältemittel auch ohne besondere Sicherheitsvorkehrungen verwendet werden, da kein Ammoniak nach außen dringen kann. Die Toxizität und Entzündlichkeit von Ammoniak ist daher unerheblich.

Durch die Anordnung des Elektromotors außerhalb des Ammoniakstroms, d. h. die Vermeidung der sonst üblichen Saug- oder Druckgaskühlung des Verdichters und des Elektromotors, wird eine negative Beeinflussung des Wirkungsgrades aufgrund der Verringerung der Dampfdichte vermieden.

Von dem Kältemittelstrom aus dem Verdichter mitgerissenes Öl, das zur Schmierung und Kühlung des Verdichters eingesetzt wird, ist bei den herrschenden Betriebstemperaturen (bis zu 80°C) in Verbindung mit Ammoniak gegenüber Kunststoffen besonders aggressiv. Durch die Anordnung des Elektromotors außerhalb des Kältemittelstromes wird verhindert bzw. erschwert, daß diese Öl und sonstige im Kältemittelstrom mitgerissene feste oder flüssige Verunreinigungen in den Elektromotor gelangen und dort Schäden verursachen.

Die vorteilhafte Ausgestaltung der Erfindung nach Anspruch 2 zeigt eine besonders kostengünstige Realisierung des ammoniakbeständigen Elektromotors auf.

Die vorteilhafte Ausgestaltung der Erfindung nach Anspruch 3 ermöglicht einen Verzicht der üblicherweise zur Fixierung der Statorwicklungen eingesetzten Gießharze, die aber nicht gleichzeitig gegenüber Ammoniak und Öl beständig sind.

Die vorteilhafte Ausgestaltung der Erfindung nach Anspruch 4 lehrt für die halbhermetische Kapselung die Verwendung einer unelastischen Flachdichtung, insbesondere aus Graphit. Diese Dichtung zeichnet sich durch eine hohe Lebensdauer aus. Teflon ist als Dichtungsmaterial trotz seiner Beständigkeit weniger geeignet, da es sich plastisch verformen kann.

Durch eine Kühlung mittels Öleinspritzung (Anspruch 5) können in einer einstufigen Verdichtung hohe Drücke und damit entsprechend hohe Kondensationstemperaturen erreicht werden. Dies ist insbesondere bei Ammoniak als Kältemittel wichtig, da Ammoniak bei einer einstufigen Verdichtung ohne Kühlung stark überhitzen würde.

Durch die halbhermetische Kapselung in Verbindung mit der Kühlung durch Öleinspritzung (Anspruch 5) ist es möglich mit nur einer Verdichtungsstufe Tiefkälte bei Verdampfertemperaturen von $T_0 = -40°C$ und darunter zu erzeugen, da das in den Verdichter eingespritzte Öl die entstehende Kompressionswärme auch bei hohen Verflüssigungsdrucken aufnimmt und abführt.

Durch die vorteilhafte vertikale Anordung des Motor-Verdichter-Aggregats, mit dem Motor über dem Verdichter (Anspruch 7), wird durch die Schwerkraft zusätzlich verhindert bzw. erheblich erschwert, daß in dem Kältemittelstrom mitgerissenes Öl in den Motor gelangt.

Durch die halbhermetische Kapselung ist es auch möglich die Kältemaschine auf Saugdrücke unter Umgebungsdruck auszulegen (Anspruch 8), ohne Gefahr zu laufen, daß der Kältemittelkreislauf durch das Eindringen von Luft und Luftfeuchtigkeit "vergiftet" wird.

Als Verdichter sind besonders alle Verdichter mit rotierenden Verdichtungselementen geeignet, bei denen der Druck von der Saugseite (Verdichtereinlaß) zu der Druckseite (Verdichterauslaß) kontinuierlich ansteigt. Besonders geeignet sind gemäß Anspruch 9 Schraubenverdichter. Kolbenkompressoren, bei denen der Druck abwechselnd ansteigt und wieder abfällt, sind weniger geeignet, da derartige Verdichter nicht mit zwei oder mehreren Sauganschlüssen zur gleichzeitigen Entsaugung von Gasen bei verschiedenen Druckniveaus versehen werden können. Wegen ihrer federbelasteten Saug- und Auslaßventile eignen sich Kolbenverdichter außerdem nicht für einen Betrieb in einem großen Drehzahlbereich.

xxx
Durch die an sich energetisch ungünstige Verwendung eines von dem Kältekreislauf getrennten Sole- bzw. Kälteträgerkreislaufes (zusätzliches $\Delta T$) (Anspruch 9) ist es möglich, den Verflüssiger im Außenbereich aufzustellen und die Verflüssigertemperatur an die vorherrschende Außentemperatur anzupassen. Wenn man bedenkt, daß die Jahresmitteltemperatur in München bei 7,4°C liegt, wird deutlich, daß hier ein erhebliches Einsparungspotential vorhanden ist. Durch die erfindungsgemäße Anpassung der Verflüssigungstemperatur an die im Vergleich zur Innenraumtemperatur niedrigere Außentemperatur ergibt sich ein kleineres Druckgefälle am Verdichter, was eine entsprechend geringere elektrische Leistungsaufnahme bzw. eine entsprechende Energieeinsparung zur Folge hat.

Ein weiterer Vorteil des zusätzlichen Solekreislaufes besteht darin, daß das Sole- bzw. Kälteträgerkreislaufleitungsnetz nicht von einem entsprechend ausgebildeten Kältetechniker verlegt werden muß, sondern daß diese Aufgabe von einem Heizungs- und Wasserinstallateur erledigt werden kann.

Die Drehzahlregelung erfolgt bei einem Elektromotor vorzugsweise mittels eines Frequenzumrichters.

Die Drehzahlregelung des Verdichters bewirkt, daß der Verdichter - anders als bei der herkömmlichen Ein-Aus-Regelung - nicht immer mit optimalen Wirkungsgrad arbeitet. Darüberhinaus ist die Drehzahlregelung aufwendig und teuer. Es hat sich jedoch gezeigt, daß sich die Gesamtwirtschaftlichkeit der Kältemaschine erhöht, da aufgrund der Drehzahlregelung jeweils nur soviel Kältemittel verdichtet und transportiert wird, daß die momentan geforderte Kälteleistung erbracht werden kann. Damit wird die Kältemaschine kontinuierlich an den jeweiligen Bedarf angepaßt bzw. bedarfsgerecht geregelt.

Die Anpassung der Kälteleistung an den Bedarf erfolgt gemäß Anspruch 12 bzw. 13 besonders vorteilhaft dadurch, daß die Drehzahlregelung durch die Soletemperatur, insbesondere durch die Solerücklauftemperatur geführt wird. Alternativ kann die Drehzahl auch über die Verdampfertemperatur geregelt werden.

Gemäß einer besonders bevorzugten Ausführungsform der Erfindung sind im Kälteträgerkreislauf zwei Verdampfer vorgesehen, die auf unterschiedlichem Temperaturniveaus Kälteleistung erbringen. Das in diesen beiden Verdampfern auf unterschiedlichen Druck- bzw. Temperaturniveaus erzeugte gasförmige Kältemittel wird dem Schraubenverdichter über zwei getrennte Sauganschlüsse zugeführt, wie sie an sich von Schraubenverdichtern mit Economizer-Schaltung bekannt sind.

Die übrigen Unteransprüche beziehen sich auf weitere besonders wirtschaftliche Schaltungen.

Weitere Einzelheiten, Merkmale und Vorteile der Erfindung ergeben sich aus der nachfolgenden Beschreibung anhand der Zeichnungen. Es zeigt:

Fig. 1     eine schematische Darstellung einer ersten Ausführungsform der Erfindung,

Fig. 2     ein gemessenes Kälteleistungskennfeld der erfindungsgemäßen Kältemaschine für Tief-, Plus-, und Klimakälte,

Fig. 3     gemessene Gütegrade der erfindungsgemäßen Kältemaschine im Vergleich mit bekannten bzw. herkömmlichen ein-, zwei- und dreistufigen Kältemaschinen, für das Kältemittel Ammoniak

Fig. 4     eine graphische Darstellung der Reduzierung der Antriebsenergie für die erfindungsgemäße Kältemaschine im Vergleich mit herkömmlichen Kältemaschinen,

Fig. 5     zeigt eine Tabelle aus der das Einsparungspotential der erfindungsgemäßen Anlage im Vergleich mit einer herkömmlichen Anlage zu ersehen ist,

Fig. 6     zeigt eine zweite Ausführungsform der Erfindung, bei der zwei miteinander verbundene Solekreisläufe zur Bereitstellung von Kälteleistung auf unterschiedlichen Temperaturniveaus vorgesehen sind,

Fig. 7     zeigt eine dritte Ausführungsform, die sich von der zweiten Ausführungsform lediglich durch eine geänderte Drosseleinrichtung unterscheidet,

Fig. 8     zeigt eine vierte Ausführungsform der Erfindung mit zwei Verdampfern und zwei getrennten zugeordneten Solekreisläufen, die abwechselnd mittels einstufiger Verdichtung mit Kälteleistung versorgt werden,

Fig. 9     zeigt eine fünfte Ausführungsform der Erfindung mit zwei Solekreisläufen, die mit zwei verschiedenen Verdampfern quasi zweistufig parallel an einen Schraubenverdichter angeschlossen sind

Fig. 10     zeigt die Prozeßführung der fünften Ausführungsform in einem p-h-Diagramm,

Fig. 11     zeigt eine sechste Ausführungsform der Erfindung mit zwei Solekreisläufen, die mit zwei verschiedenen Verdampfern hintereinandergeschaltet quasi zweistufig an einen Schraubenverdichter angeschlossen sind.

Fig. 12     ist eine Darstellung der Funktionsweise der Ausführungsform gemäß Figur 11 in einem p-h-Diagramm,

Fig. 13     zeigt eine siebte Ausführungsform der Erfindung mit zwei Solekreisläufen, ähnlich der Ausführungsform nach Fig. 11, jedoch ohne Solezumischung,

Fig. 14     ist eine Darstellung der Funktionsweise der Ausführungsform gemäß Figur 13 in einem p-h-Diagramm,

Fig. 15     eine achte Ausführungsform der Erfindung, ähnlich der Ausführungsform nach Fig. 9, jedoch mit Unterkühlung des flüssigen Kältemittels vor dem Eintritt in dem bei tieferem Temperaturniveau betriebenen Verdampfer, und

Fig. 16     eine neunte Ausführungsform der Erfindung, ähnlich der Ausführungsform nach Fig. 15, jedoch mit einer anderen Schaltung zur Unterkühlung des flüssigen Kältemittels.

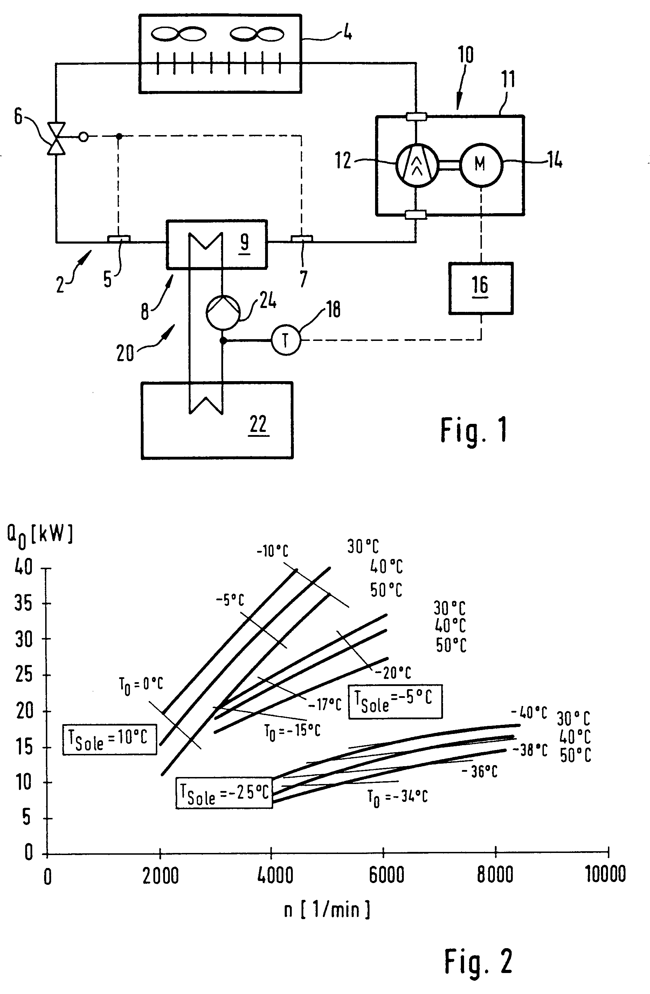

Figur 1 zeigt eine erste Ausführungsform der Erfindung bei der ein Kältemittelkreislauf 2 durch einen Verflüssiger 4, eine Drosseleinrichtung 6, einen Verdampfer 8 und ein Motor-Verdichter-Aggregat 10 aufrechterhalten wird. Das Motor-Verdichter-Aggregat 10 umfaßt einen Schraubenverdichter 12, der durch einen Elektromotor 14 angetrieben wird. Das Motor-Verdichter-Aggregat 10 ist in einer halbhermetischen Kapselung 11 ausgeführt. Die Drehzahl des Schraubenverdichters 12 und damit die Saugleistung wird über einen Drehzahlregler 16 geregelt. Die in dem Verdampfer 8 erzeugte Kälteleistung wird auf einen Sole- bzw. Kälteträgerkreislauf 20 übertragen, der sie über eine Wärmetauschereinrichtung 22 an das zu kühlende Gut abgibt. Die Sole in dem Solekreislauf 20 wird durch eine Flüssigkeitspumpe 24 umgewälzt.

Die Drosseleinrichtung 6 ist bei der ersten Ausführungsform ein elektronisches Expansionsventil, wie es z. B aus der DE-PS 41 00 749 bekannt ist. Das elektronische Expansionsventil 6 umfaßt Temperaturfühler 5 und 7, die die Temperatur des Kältemittels vor und nach dem Verdampfer 9 erfassen. Das elektronisch geregelte Expansionsventil 6 ist in der Lage, den Volumenstrom abhängig von geforderter Kälteleistung und Verdampfungstemperatur so einzustellen, daß eine gewünschte Überhitzungstemperatur des Ammoniakdampfes auch bei stark schwankender geforderter Kälteleistung gewährleistet ist.

Das Motor-Verdichter-Aggregat 10 ist als halbhermetische Einheit in der Lage, unter Ammoniakatmosphäre (Ammoniak als Kältemittel) das Sauggas bis zu Drücken von 2,5 MPa zu verdichten. Der Elektromotor 14 ist als druckfester, ammoniakbeständiger Asynchronmotor ausgebildet. Die Regeleinrichtung 16 erhält die Regelgröße von einem Temperaturfühler 18, der die Solerücklauftemperatur erfaßt. Durch die Drehzahlregelung 16 wird jeweils nur soviel Sauggas bzw. Kältemittel angesaugt und verdichtet, wie Kälteleistung über die Wärmetauschereinrichtung 22 abgefordert wird.

Die Verdampfereinrichtung 8 besteht bei der ersten Ausführungsform vorzugsweise aus einem vollverschweißte Plattenwärmetauscher 9, der mit siedendem Ammoniak als Kältemittel teilweise oder vollständig (überfluteter Verdampfer) gefüllt ist. Die Kälteleistung wird von einem nicht toxischen, biologisch abbaubaren Kälteträger, das vorzugsweise für den Lebensmittelbereich zugelassen ist, von dem Verdampfer 9 zu der Wärmetauschereinrichtung 22 transportiert.

Für die Ausführungsform gemäß Figur 1 wurden für die Bereiche der Tief-, Plus- und Klimakälte (Soletemperaturen von T=-25°C, -5°C, 10°C) Kälteleistungskennfelder mit Aussagen über Verdampfungs- und Verflüssigertemperaturen ermittelt, wie sie in Figur 2 dargestellt sind. Diese Kälteleistungskennfelder bieten den Kältetechnikern die Möglichkeit einer eigenen Anlagenauslegung in Abhängigkeit von dem jeweiligen Verwendungszweck. In dem Diagramm von Figur 2 ist auf der X-Achse die Drehzahl des Verdichters und auf der Y-Achse die an der Wärmetauschereinrichtung 22 zur Verfügung stehende Kälteleistung aufgetragen. Für Soletemperaturen $T_{Sole}$ von -25°C, - 5°C und 10°C sind jeweils drei Kennlinien in Figur 2 dargestellt, die sich jeweils auf drei unterschiedliche Kondensatortemperaturen von $T_C$ von 30°C, 40°C und 50°C beziehen. Ebenfalls eingezeichnet sind jeweils drei Kurven für die den jeweiligen Soletemperaturen zugeordneten Verdampfertemperaturen $T_0$.

Die nachfolgende Tabelle 1 gibt für Tiefkälte, Pluskälte und Klimakälte die mit der erfindungsgemäß ausgeführten Anlage jeweils maximal erreichten Werte für Kälteleistung $Q_0$, Kälteleistungsziffer $\varepsilon_k$, Gütegrad $\eta_{KC}$ und Verdampfertemperatur $T_0$ an.

### Tabelle 1

|  | $Q_0$ (kW) | $\varepsilon_K$ | $\eta_{KC}$ | $T_0$(°C) | $T_{Solerücklauf}$ (°C) |
|---|---|---|---|---|---|
| Tiefkälte | 17 | 1,5 | 0,42 | -40 | -25 |
| Pluskälte | 33 | 2,5 | 0,52 | -22 | -5 |
| Klimakälte | 42 | 3,3 | 0,55 | -10 | +10 |
| (Kondensationstemperatur $T_C$=30°C) | | | | | |

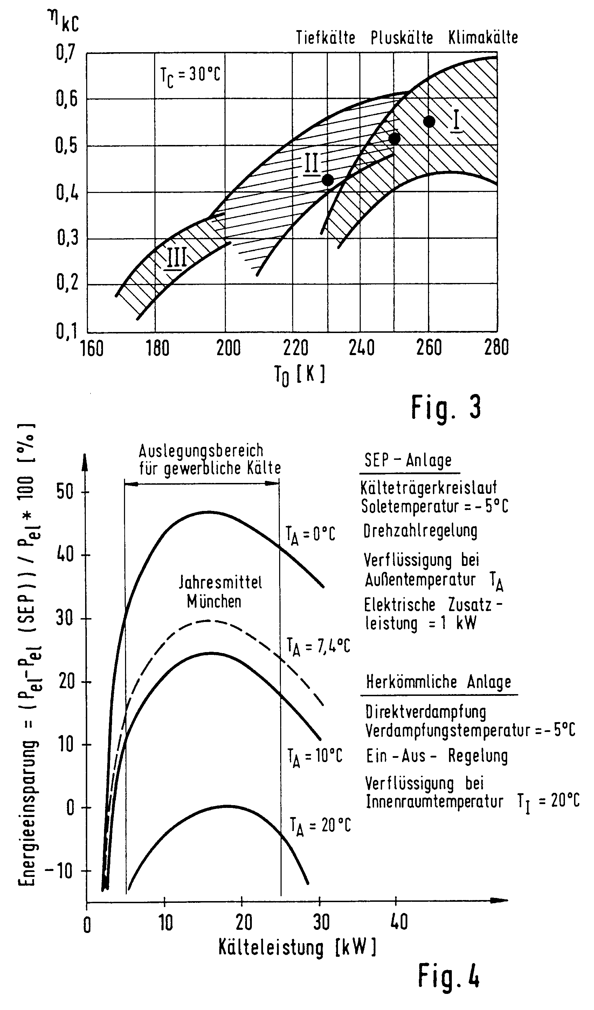

Die Werte aus Tabelle 1 sind in Figur 3 in ein Diagramm eingezeichnet, bei dem auf der X-Achse die Verdampfertemperatur $T_0$ in Kelvin und auf der Y-Achse der Gütegrand $\eta_{KC}$ aufgetragen ist. Die schraffierten Bereiche zeigen die erreichbaren Werte mit herkömmlichen Kälteanlagen, die Punkte zeigen die mit der erfindungsgemäßen Kälteanlage nach Figur 1 erreichten Werte. Es zeigt sich im Vergleich zur Streubreite der Gütegrade herkömmlicher Ammoniakanlagen eine vor allem in Richtung niedriger Temperaturen ausgezeichnete Ausgangsposition, die bei Berücksichtigung derzeit noch ungenutzter Optimierungsmöglichkeiten eine sehr gute Wirtschaftlichkeit verspricht. Der wirtschaftliche Gesamterfolg hängt allerdings nicht allein von der Prozeßgüte ab.

Figur 4 zeigt ein Diagramm aus der sich die Energieeinsparung bei Verwendung der erfindungsgemäßen Kälteanlage nach Figur 1 im Vergleich zu herkömmlichen Kälteanlagen ergibt. Auf der X-Achse ist hierbei die Kälteleistung in Kilowatt aufgetragen und auf der Y-Achse ist die pozentuale Energieensparung = ($P_{el}$(St.d.T) - $P_{el}$(Erfindung))/$P_{el}$(St.d.T) * 100 aufgetragen. Zum Vergleich wurde hierbei eine herkömmliche Anlage angenommen und im Versuch simuliert, die bei Direktverdampfung, d.h. ohne Solekreislauf, auf eine Verdampfungstemperatur von -5°C ausgelegt ist, eine Ein-Aus-Regelung aufweist und eine Verflüssigungstemperatur von ca. 20°C (Innenraumtemperatur) aufweist. Die verschiedenen Kurven beziehen sich hierbei auf unterschiedliche Außentemperaturen $T_A$ nach denen sich die Verflüssigertemperatur $T_C$ der erfindungsgemäßen Kältemaschine richtet.

Nützt man den Vorteil eines separaten Kälteträgerkreislaufs und kühlt den Verflüssiger 4 mit Außenluft so ergeben sich an kühlen Tagen und Nächten erhebliche Vorteile die zu einer Reduzierung der Antriebsleistung Pel von bis zu 35% führen können. Bei gleichzeitigem Einsatz der erfindungsgemäßen Drehzahlregelung sind bei einer Außentemperatur um den Gefrierpunkt Einsparungen an Antriebsenergie von bis zu 50% möglich.

Die Regelung der Drehzahl folgt den Lastanforderungen selbst bei stark sprunghaftem Verlauf ohne nennenswerte Überschwinger. Selbst stark schwankende Umgebungsbedingungen führen nicht zu kritischen Anlagenreaktionen.

Für eine gewerbliche Kälteanlage für Pluskälte (-5°C) nach dem erfindungsgemäßen Prinzip läßt sich der jährliche Stromverbrauch unter folgenden vereinfachenden Annahmen abschätzen:

- Anlagenbetrieb bei einer mittleren Jahreslufttemperatur für München $T_A$ = 7,4°C

- konstanter Stromverbrauch durch die Pumpe 24 im Kälteträgerkreislauf, Stellantrieb, elektronische Regelung: $P_{KT}$ ca. 1 kW
- Aufteilung der Kälteleistungsanforderungen für Pluskälte in
  50% Schwachlast ($Q_0$ = 5 kW)
  25% mittlere Last ($Q_0$ = 10 kW)
  25% Vollast ($Q_0$ = 20 kW)

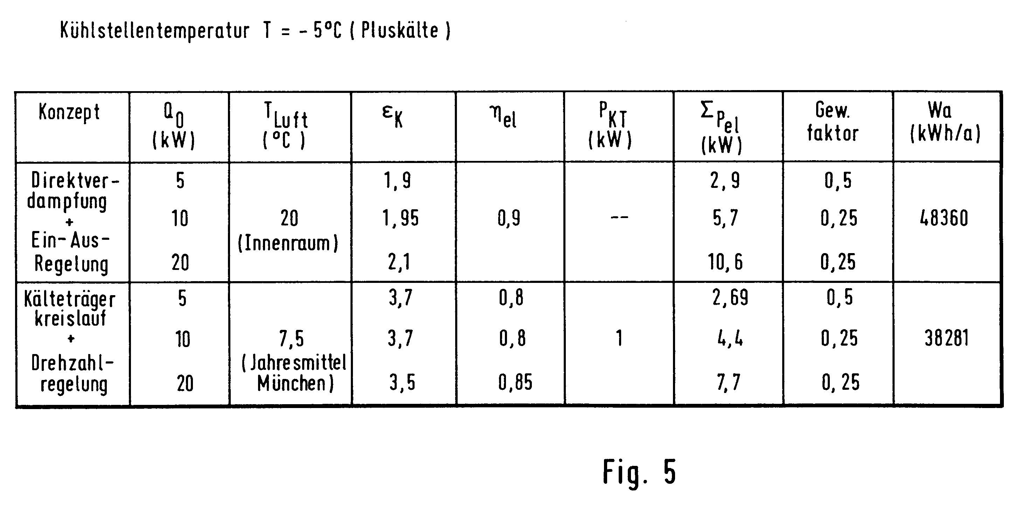

Wie der Tabelle in Figur 5 zu entnehmen ist, ergibt sich bei der Verwendung der erfindungsgemäßen Kältemaschine im Vergleich zu einer herkömmlichen Kälteanlage eine Einsparung von ca. 10.000 kWh/Jahr. Das entspricht bei einem Strompreis von 0,20 DM/kWh eine Ersparnis von ca. 2.000 DM pro Jahr.

Für eine Klimatisierung mit Lufttemperaturen deutlich über der Innenraumtemperatur kann durch den Einsatz der Drehzahlregelung mit einer Ersparnis elektrische Antriebsenergie von immerhin noch 15% gerechnet werden. Bei einer durchschnittlichen jährlichen Klimatisierungsleistung von 10 kW und einer Kälteleistungsziffer von 3,3 (siehe Tabelle 1) entspricht dies einer Einsparungen von ca. 4.000 kWh/Jahr. Ein Kälteträgerkreislauf bringt in diesem Falle in Verbindung mit einem luftgekühlten Verflüssiger keine darüber hinausgehende Vorteile, da sein energetisch positiver Effekt auf der Ausnützung niedriger Außentemperaturen beruht.

Bei der nachfolgenden Beschreibung weiterer Ausführungsformen der Erfindung werden für gleiche bzw. entsprechende Bauteile identische Bezugszeichen verwendet.

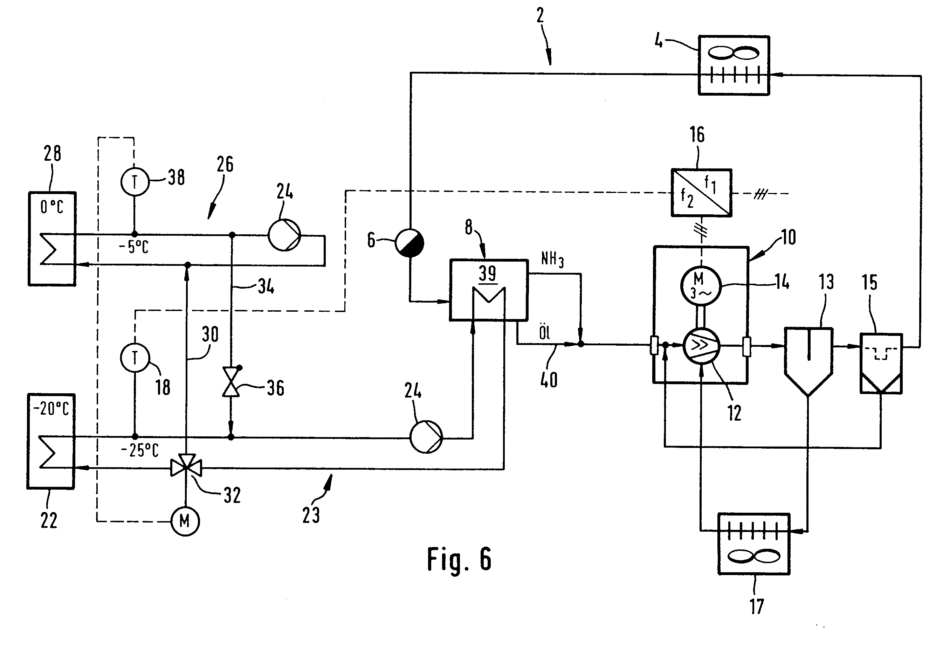

Figur 6 zeigt eine zweite Ausführungsform der vorliegenden Erfindung, die sich von der Ausführungsform gemäß Figur 1 im wesentlichen dadurch unterscheidet, daß zwei Kälteträgerkreisläufe 23 und 26 vorgesehen sind. Der Kälteträgerkreislauf 26 wird, wie der Kälteträgerkreislauf 23, durch eine Flüssigkeitspumpe 24 umgewältzt und durchläuft eine zweite Wärmetauschereinrichtung 28. Die erste Wärmetauschereinrichtung 22 stellt beispielsweise Kälteleistung auf einem Temperaturniveau von -20°C (Tiefkälte) bereit, während die zweite Wärmetauschereinrichtung 28 Kälteleistung auf einem Temperaturniveau von beispielsweise 0°C (Normalkälte) bereitstellt.

Über eine Leitung 30 und einen motorgetriebenen Drei-Wege-Mischer 32 ist der Vorlauf des Kälteträgerkreislaufs 26 mit dem Vorlauf des Kälteträgerkreislaufs 23 verbunden. Über eine Leitung 34 und ein Rückschlagventil 36 ist der Rücklauf des Kälteträgerkreislaufs 26 mit dem Rücklauf des Kälteträgerkreislaufs 23 verbunden.

Die Gesamtkälteleistung wird, wie bei der Ausführungsform gemäß Figur 1, über eine Drehzahlregeleinrichtung 16 geregelt, wobei der Soletemperaturfühler 18 im Rücklauf des ersten Kälteträgerkreislaufs 22, d. h. dem Kälteträgerkreislauf mit der tieferen Temperatur, angeordnet ist. Die Stellung des Drei-Wege-Mischers 32 erfolgt über einen Temperaturfühler 38 der im Rücklauf des zweiten Kälteträgerkreislaufs 26 angeordnet ist. Damit wird durch geringes Zumischen von sehr kalter Sole bzw. Kälteträger aus dem ersten Kälteträgerkreislauf 22 in den vergleichsweise wärmeren zweiten Kälteträgerkreislauf 26 die in der zweiten Wärmetauschereinrichtung 28 erbrachte Kälteleistung geregelt. Die in der ersten Wärmetauschereinrichtung 22 erbrachte Kälteleistung sowie die gesamte Kälteleistung wird wie bei der Ausführungsform gemäß Figur 1 geregelt.

Das Motor-Verdichter-Aggregat 10 entspricht in seinem Aufbau dem von Figur 1, es ist lediglich vertikal mit dem Motor 14 über dem Verdichter 12 angeordnet. Zusätzlich ist in Figur 6 zwischen Motor-Verdichter-Aggregat 10 und Verflüssiger 4 noch ein erster Ölabscheider 13, ein dem ersten Ölabscheider 13 nachgeschalteter zweiter Ölabscheider 15 dargestellt. Das aus dem ersten Ölabscheider 13 abgezogene Öl wird durch einen Öl-kühler 17 gekühlt. Das in dem zweiten Ölabscheider 15 abgeschiedene Öl wird unmittelbar über eine Drainageleitung dem Verdichter 12 zugeführt. Das in dem ersten Ölabscheider 13 abgeschiedene Öl wird zunächst in dem Ölkühler 17 gekühlt und dann zur Schmierung, Abdichtung und Kühlung dem Schraubenverdichter 12 zugeführt. Diese zusätzlichen Komponenten können auch bei der Ausführungsform nach Figur 1 vorgesehen werden.

Die Verdampfereinrichtung 8 besteht aus einem überfluteten Verdampfer 39 mit einer Öldrainage 40. Das durch die Öldrainage 40 aus dem Verdampfer 39 abgezogene Öl wird unmittelbar wieder dem Sauggasstrom zugeführt. Als Drosseleinrichtung 6 wird bei der zweiten Ausführungsform anstelle des elektronischen Expansionsventils ein Hochdruckschwimmerabscheider verwendet, der sowohl preiswert ist, als auch gut zu dem System "Überfluteter Verdampfer" 39 paßt.

Wie bei der Ausführungsform gemäß Figur 1 erhält die Drehzahlregelung 16 die Rücklauftemperatur der Kühlsole im ersten Kälteträgerkreislauf 23 als Regelgröße, so daß im Kühlraum eine Maximaltemperatur von z.B. -20°C garantiert ist. Bei Bedarf kann der zweite Sole- bzw. Kälteträgerkreislauf 26 mit dem höheren Temperaturniveau mit der Tiefkältesole gespeist werden. Die Temperatur des zweiten Kälteträgerkreislaufs 26 wird, wie erwähnt, durch den motorgetriebenen Dreiwege-Mischer 32 sichergestellt. Die maximale Kälteleistung der Anlage mit zwei Solekreisläufen 23 und 26 entspricht in der Summe der Kälteleistung für die einfache Tiefkälte, d.h.

Kälteleitsung $Q_0$ max = 17 kW
(Verflüssigungstemperatur Tc = 30°C).
Verdampfungstemperatur $T_0$=-40°C
$T_{Sole1}$ = -25°C
$T_{Sole2}$ = -5°C

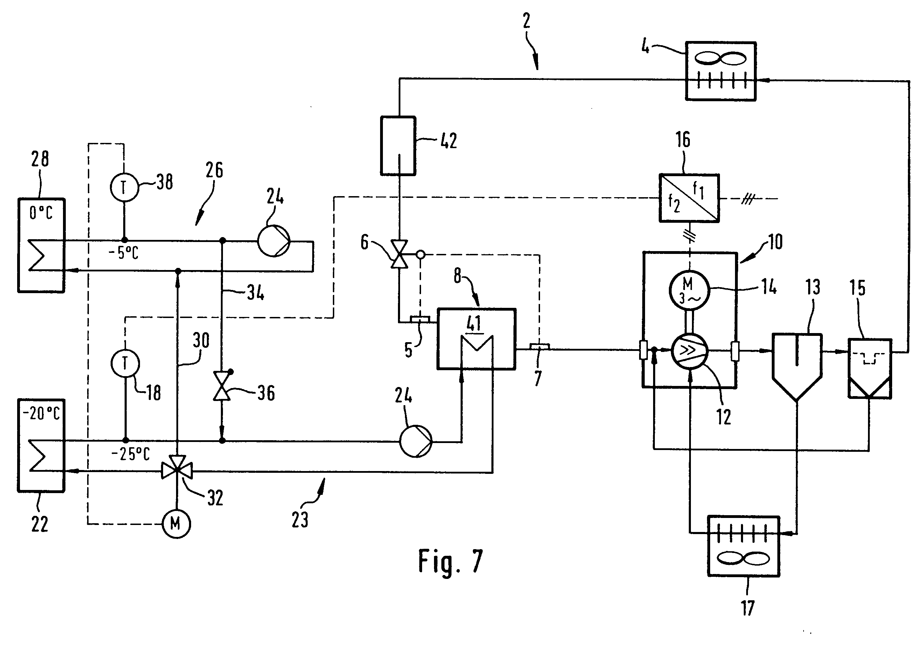

Figur 7 zeigt eine dritte Ausführungsform der vorliegenden Erfindung, die im wesentlichen der Ausführungsform gemäß Figur 6 entspricht. Der Unterschied besteht lediglich darin, daß die Verdampfereinrichtung 8 anstelle eines überfluteten Verdampfers ein Trockenverdampfer 41 und als Drosseleinrichtung 6 anstelle des Hochdruckschwimmabscheiders wieder ein elektronisches Expansionsventil verwendet wird. Zusätzlich ist zwischen Kondensator bzw. Verflüssiger 4 der Drosseleinrichtung 6 ein Flüssigkeitssammler 42 geschaltet. Der von oben eingespritzte Trockenverdampfer 41 benötigt eine Überhitzungsregelung, die durch das elektronische Expansionsventil 6 erbracht wird.

Der Vorteil dieser dritten Ausführungsform liegt im geringen Bedarf an Kältemittel. Dies hat bei Unterschreitung der 10-kg-Grenze Vorteile bei der Aufstellung der Anlage gemäß den gesetzlichen Bestimmungen (VBG 20). Die Überhitzungsregelung mit Regler- und Expansionsventil ist gegenüber der einfachen Hochdruckabscheidung gemäß Fig. 6 allerdings etwas kostspieliger.

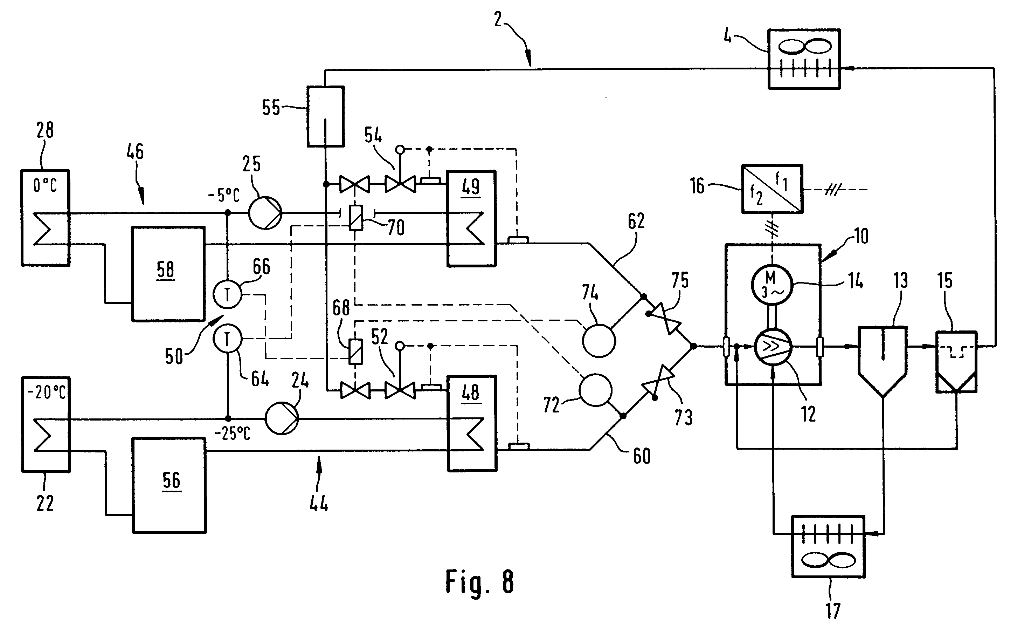

Figur 8 zeigt eine vierte Ausführungsform der Erfindung. Diese vierte Ausführungsform weist ebenfalls einen ersten und einen zweiten Kälteträgerkreislauf 44 bzw. 46 auf. Im Gegensatz zu den Ausführungsformen gemäß Fig. 6 und 7 ist jedoch hierbei jedem Kälteträgerkreislauf 44 und 46 ein eigener Verdampfer 48 bzw. 49 und eine eigene Wärmetauschereinrichtung 22 und **28** zugeordnet. Über eine Schalteinrichtung 50 wird der Kältemittelkreislauf 2 abwechselnd durch den ersten Verdampfer 48 oder den zweiten Verdampfer 49 geführt, so daß abwechselnd der erste Kälteträgerkreislauf 44 oder der zweite Kälteträgerkreislauf 46 mit Kälteleistung versorgt wird.

Jedem der beiden parallel geschalteten Verdampfern 48 bzw. 49 ist eine eigene Drosseleinrichtung 6 in Form eines elektronischen Expansionsventiles 52 bzw. 54 zugeordnet. Zwischen den elektronischen Expansionsventilen 52 und 54 und dem Verflüssiger 4 ist ein Flüssigkeitssammler 55 geschaltet. Damit trotz der abwechselnden Belieferung der Kälteträgerkreisläufe 44 und 46 mit Kälteleistung an den Wärmetauschern 22 bzw. 23 kontinuierlich Kälteleistung entnommen werden kann, sind in den ersten bzw. zweiten Kälteträgerkreislauf 44 bzw. 46 ein erster bzw. ein zweiter Speicher 56 bzw. 58 geschaltet.

Bei den beiden Verdampfern 48 und 49 handelt es sich um Trockenverdampfer. Damit die Kälteträgerkreisläufe Kälteleistung auf unterschiedlichen Temperaturniveaus, z.B. bei 0°C und bei -20°C, bereitstellen können, sind die zugeordneten Verdampfer 48 und 49 für unterschiedliche Verdampfungstemperaturen ausgelegt. Der erste Verdampfer 48 ist über eine Dampfleitung 60 und der zweite Verdampfer 49 über eine Dampfleitung 62 mit dem nicht näher dargestellten Sauganschluß des Schraubenverdichters 12 verbunden.

Die Schalteinrichtung 50 umfaßt jeweils für den ersten und zweiten Kälteträgerkreislauf 44 bzw. 46 einen ersten und zweiten Soletemperaturfühler 64 bzw. 66, die mit einem ersten bzw. zweiten Schaltventil 68 bzw. 70 verbunden sind. Das erste Schaltventil 68 ist unmittelbar vor dem ersten elektronischen Expansionsventil 52 und das zweite Schaltventil 70 ist unmittelbar vor dem elektronischen Expansionsventil 54 im Kältemittelkreislauf 2 angeordnet. Die beiden Schaltventile 68 und 70 sind jeweils mit einem ersten und zweiten Niederdruckpressostaten bzw. Druckschalter 72 bzw. 74 verbunden. Nach dem Niederdruckpressostaten 72 bzw. 74 sind in die Leitungen 62 bzw. 60 Rückschlagventile 73 bzw. 75 geschaltet.

Nachfolgend wird die Funktion der vierten Ausführungform gemäß Fig. 8 beschrieben. Es sei angenommen, daß der Verdampfer 49 in den Kälteträgerkreislauf 2 geschaltet ist, d.h. das Schaltventil 70 ist offen und das Schaltventil 68 ist geschlossen. Somit wird die im Wärmetauscher 22 bereitgestellte Kälteleistung aus dem Speicher 56 geliefert. Übersteigt nun die Rücklauftemperatur des ersten Solekreises 44 einen definierten Grenzwert, d.h. die Temperatur im Speicher 56 ist nicht mehr tief genug, so schließt das dem Verdampfer 49 zugeordnete Magnetventil 70. Damit wird in den Verdampfer 49 kein flüssiges Kältemittel mehr eingeführt und der Verdampfer wird durch den Verdichter 12 "leer gesaugt" und der Druck im Verdampfer 49 und in den Saugleitungen 62 und 60 sinkt ab. Ist der Druck in den Leitungen 60 und 62 auf den Verdampferdruck des Verdampfers 48 abgesunken, öffnet der Druckschalter 74 in der Leitung 62 das Schaltventil 68, so daß jetzt flüssiges Kältemittel in den ersten Verdampfer 48 fließt und die Kälteerzeugung für den ersten Kälteträgerkreislauf 44 einsetzt. In analoger Weise erfolgt die Umschaltung bzw. die Zurückschaltung des Verdampfers 49 in den Kälteträgerkreislauf 2, wenn der Temperaturfühler 66 das Überschreiten einer bestimmten Grenztemperatur der Sole im Kälteträgerkreislauf 46 meldet.

Die Regelung der Gesamtkälteleistung der Ausführungsform gemäß Fig. 8 mittels des Drehzahlreglers 16 kann beispielsweise über die Registrierung der Schaltzyklen zwischen den beiden Kälteträgerkreisläufen 44 und 46 erfolgen. Wird zwischen zwei Umschaltvorgängen zwischen den beiden Kälteträgerkreisläufen eine Minimalzeit unterschritten, wird die Drehzahl um einen festen Betrag erhöht. Erniedrigt wird sie beim Überschreiten einer maximalen Schaltzeit.

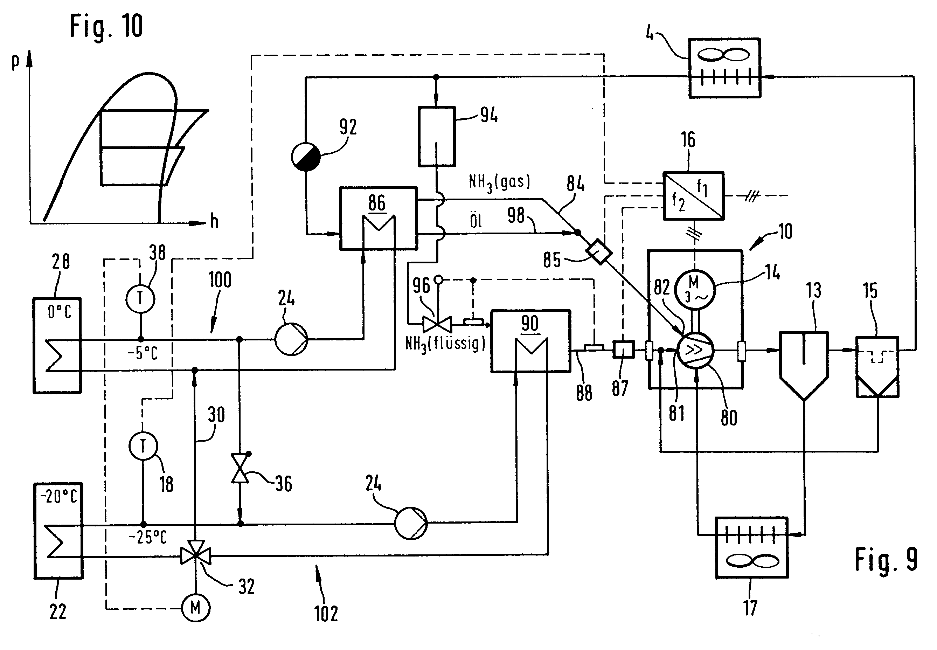

Fig. 9 und 10 dienen zur Erläuterung einer fünften Ausführungsform der vorliegenden Erfindung, wobei Fig. 9 den Schaltplan und Fig. 10 die Prozeßführung in einem p-h-Diagramm zeigt. Bei der fünften Ausführungsform handelt es sich um einen zweistufigen Kältekreislauf mit einem speziellen Schraubenverdichter 80, der einen ersten Sauganschluß 81 auf dem tiefsten Druckniveau und einen zweiten Sauganschluß 82 auf einem Zwischendruckniveau aufweist. Der Sauganschluß 82 ist über eine Leitung 84 mit einem ersten Verdampfer 86 verbunden und der Sauganschluß 82 ist über eine Saugleitung 88 mit einem zweiten Verdampfer 90 verbunden. Die beiden Verdampfer 86 und 90 sind zwischen dem Verflüssiger 4 und dem Verdichter 80 parallel in den Kälteträgerkreislauf geschaltet. Zwischen Kondensator 4 und dem ersten Verdampfer 86 ist eine Drosseleinrichtung 92 in Form eines Hochdruckschwimmerabscheiders und zwischen Kondensator 4 und dem zweiten Verdampfer 90 ist ein Hochdruckflüssigkeitssammler 94 gefolgt von einer zweiten Drosseleinrichtung 96 in Form eines elektronischen Expansionsventils geschaltet.

In den ersten Verdampfer 86 verschlepptes Öl wird über eine Leitung 98 der Saugleitung 84 zugeführt.

Der erste Verdampfer 86 erzeugt Kälteleistung für einen ersten Kälteträgerkreislauf 100 auf einem Temperaturniveau, das höher ist als das Temperaturniveau auf dem der zweite Verdampfer 90 Kälteleistung für einen zweiten Kälteträgerkreislauf 102 erzeugt. Die übrigen Komponenten des ersten bzw. zweiten Kälteträgerkreislauf entsprechen der Ausführungform gemäß Fig. 7.

Bei der Ausführungsform gemäß Fig. 9 bzw. 10 können sowohl überflutete Verdampfer mit Hochdruckabscheider als auch von oben eingespritzte Trockenverdampfer eingesetzt werden.

Die Drehzahlregelung erfolgt auf folgende Weise: zwei "hermetische" Motorklappen 85 und 87 in den Saugleitungen 84 bzw. 86 regeln den Ansaugvolumenstrom nach der Sollgröße "Solerücklauftemperatur" im Kälteträgerkreislauf 102 mit dem tiefsten Temperaturniveau. Diese Solerücklauftemperatur im Kälteträgerkreislauf 102 wird über einen Temperaturfühler 18 gemessen und an den Drehzahlregler 16 weitergeleitet. Die Reglerausgangssignale werden mittels einer nicht näher dargestellten Mikroprozessorsteuerung zyklisch abgerufen. Wenn mindestens eine Drosselklappe auf voller Öffnung beharrt, wird die Drehzahl um einen bestimmten Betrag erhöht. Befinden sich beide Reglerausgänge dauerhaft unterhalb eines definierten Öffnungszustands (z. B. weniger als 0,7 der Vollöffnung), so wird die Drehzahl reduziert. Ideal ist es in diesem Fall, wenn die Drehzahl so eingestellt ist, daß mindestens eine der Ansaugstrecken 84 oder 88 ungedrosselt bleibt.

Alternativ hierzu ist es möglich anstelle der Motordrosselklappen die Teillast über die Überhitzung zweier Trockenverdampfer zu regeln.

Darüberhinaus ist die fünfte Ausführungsform mit einer Einrichtung zum Zumischen von tiefkalter Sole aus dem Kälteträgerkreislauf 102 zu der "wärmeren" Sole in dem Kälteträgerkreislauf 100 ausgerüstet, wie sie bei der zweiten (Fig. 6) und dritten Ausführungsform (Fig. 7) vorgesehen und beschrieben ist.

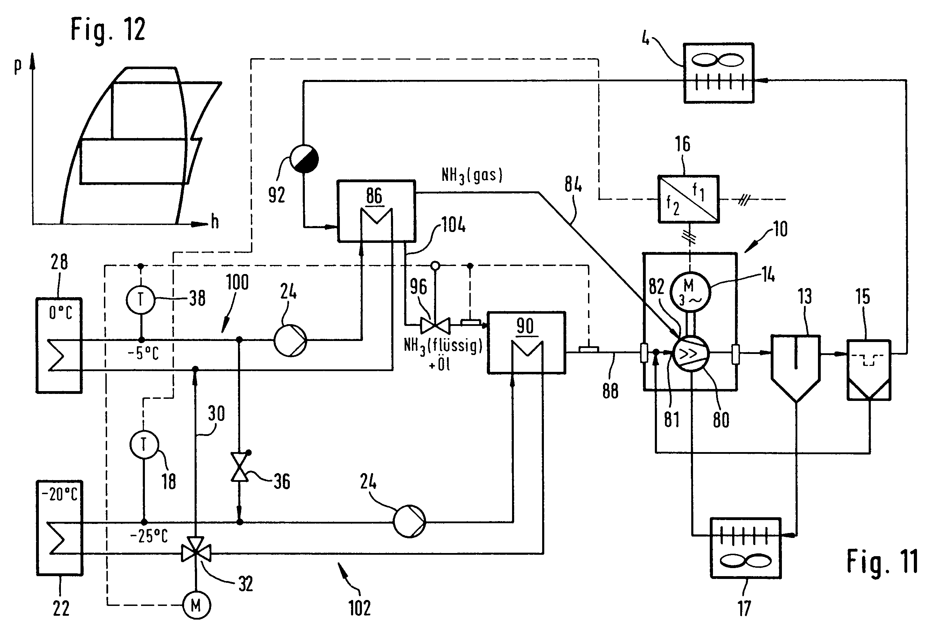

Die in den Fig. 11 und 12 dargestellte sechste Ausführungsform der Erfindung unterscheidet sich von der in den Fig. 9 und 10 dargestellten fünften Ausführungsform dadurch, daß der erste und zweite Verdampfer 86 bzw. 90 nicht parallel, sondern hintereinander geschaltet sind. Dabei handelt es sich bei dem ersten Verdampfer 86 um einen überfluteten Verdampfer, der über eine Flüssigkeitsleitung 104 mit dem zweiten Verdampfer 90 verbunden ist und diesen mit flüssigem Kältemittel beliefert.Der erste Verdampfer 86 ist über dem zweiten Verdampfer 90 angeordnet, so daß über die Leitung 104 unten aus dem ersten Verdampfer 86 flüssiges Kältemittel und dorthin verschlepptes Öl abgezogen und dem zweiten Verdampfer 90 zugeführt werden kann. Dem tieferliegenden zweiten Verdampfer 90 zugeführtes Öl wird von dem Kältemitteldampf in den Verdichter 80 mitgerissen, da der zweite Verdampfer 88 als Trockenverdampfer ausgestaltet ist.

Damit weist die sechste Ausführungsform den Vorteil auf, daß über den Trockenverdampfer 90 selbsttätig eine Öl-Rückführung in den Schraubenverdichter 80 erfolgt. Darüberhinaus besteht ein weiterer Vorteil dieser sechsten Ausführungsform darin, daß durch die Nutzung des flüssigen Ammoniakanteils aus dem ersten Verdampfer 86 nach der ersten Expansion ein Economizer-Effekt entsteht (siehe Fig. 12).

Für den Fall, daß immer mehr Normal- als Tiefkälte benötigt wird, ist eine Regelung der Drehzahl aufgrund der Tiefkältesolerücklauftemperatur möglich. Der Bedarf an Normalkälte wird über einen Motormischer 32, wie bei den Ausführungsformen gemäß den Fig. 7 und 9, durch Zumischung von Tiefkältesole reguliert. Durch den Rücklauf der Normalkältesole in den Tiefkältesolekreislauf ist die Erfassung des Gesamtleistungsbedarfs gewährleistet.

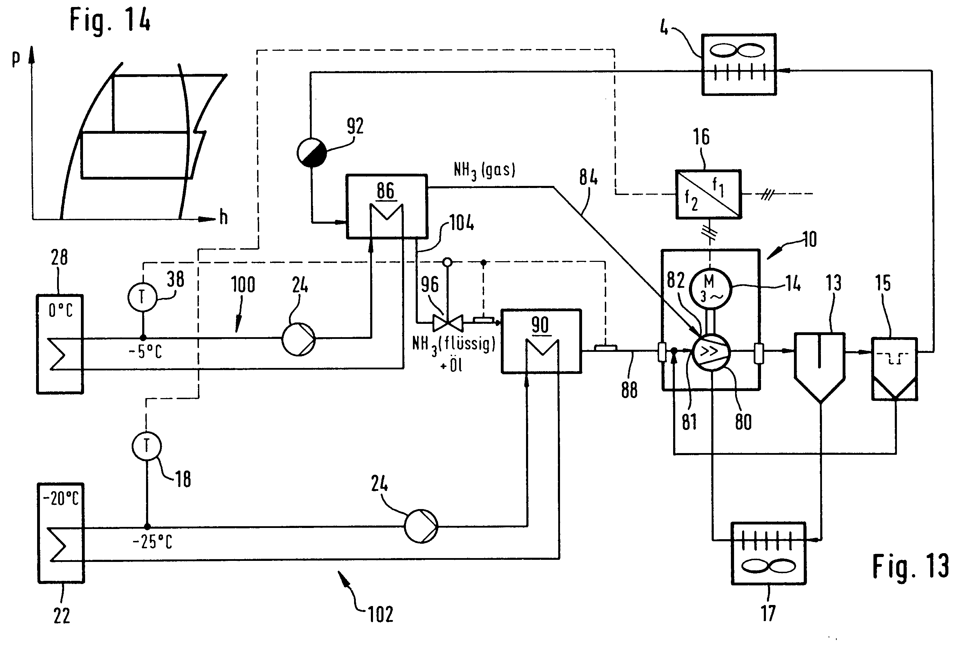

Die in den Figuren 13 und 14 dargestellte siebte Ausführungsform der Erfindung unterscheidet sich von der sechsten Ausführungsform dadurch, daß keine Einrichtung zur Zumischung von Tiefkältesole aus dem Kälteträgerkreislauf 102 zu der Normalkältesole in dem Kälteträgerkreislauf 100 vorgesehen ist, d.h. die zwei Kälteträgerkreisläufe sind stoffmäßig völlig getrennt. Die Gesamtkälteleistung wird durch die Solerücklauftemperatur der Tiefkältesole in dem Kälteträgerkreislauf 102 geregelt. Die Verteilung dieser Gesamtkälteleistung zwischen Tiefkältekreislauf 102 und Normalkältekreislauf 100, d.h. das Verhältnis zwischen der Kälteleistung, die im zweiten Verdampfer 90 erzeugt wird, und der Kälteleistung, die im ersten Verdampfer 86 erzeugt wird, wird durch die Regelung des Volumenstroms in der Saugleitung 88 des zweiten Verdampfers (80) (Tiefkälte) geregelt. Die Variation des Volumenstroms in der Saugleitung 88 erfolgt mittels dem elektronischen Expansionsventil 96 vor dem zweiten Verdampfer 90 durch Überhitzungsregelung. Alternativ kann die Volumenstromvariation auch durch eine in der Saugleitung 88 angeordnete Drosselklappe (nicht dargestellt) erfolgen.

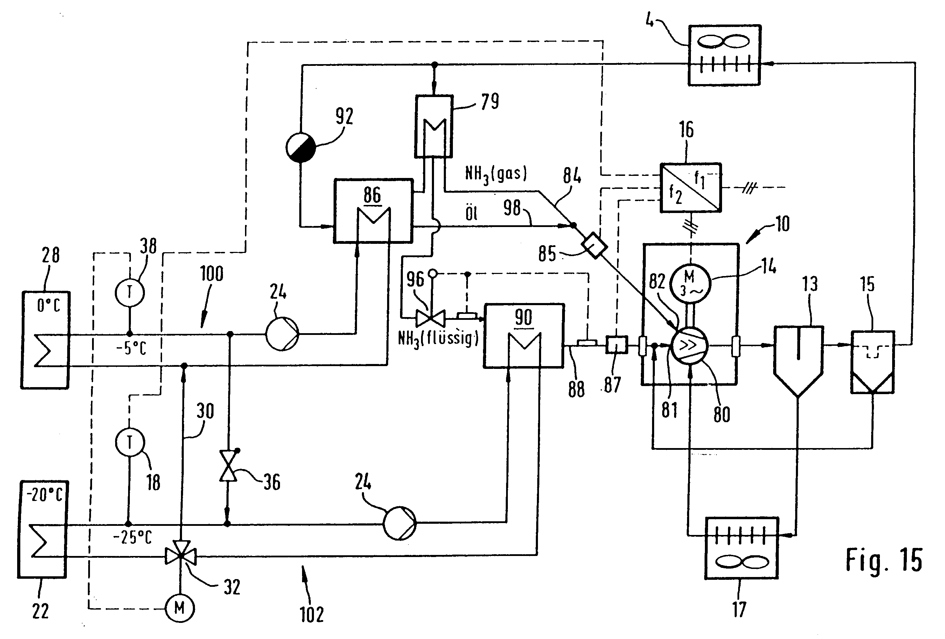

Die in Fig. 15 dargestellte achte Ausführungsform der Erfindung unterscheidet sich von der in Fig. 9 dargestellten Ausführungsform dadurch, daß das zum Verdampfer 90 zur Bereitstellung der Tiefkälte geleitete flüssige Kältemittel durch das aus dem Verdampfer 86 für die Normalkälte austretende Sauggas in einem Wärmetauscher 79 gekühlt wird. Bei gleichem Leistungsaufwand des Verdichters wird im Vergleich zu der in Fig. 9 dargestellten Ausführungsform die Tiefkälteleistung erhöht und die Normalkälteleistung wegen der im Wäremtauscher 79 abnehmenden Sauggasdichte erniedrigt.

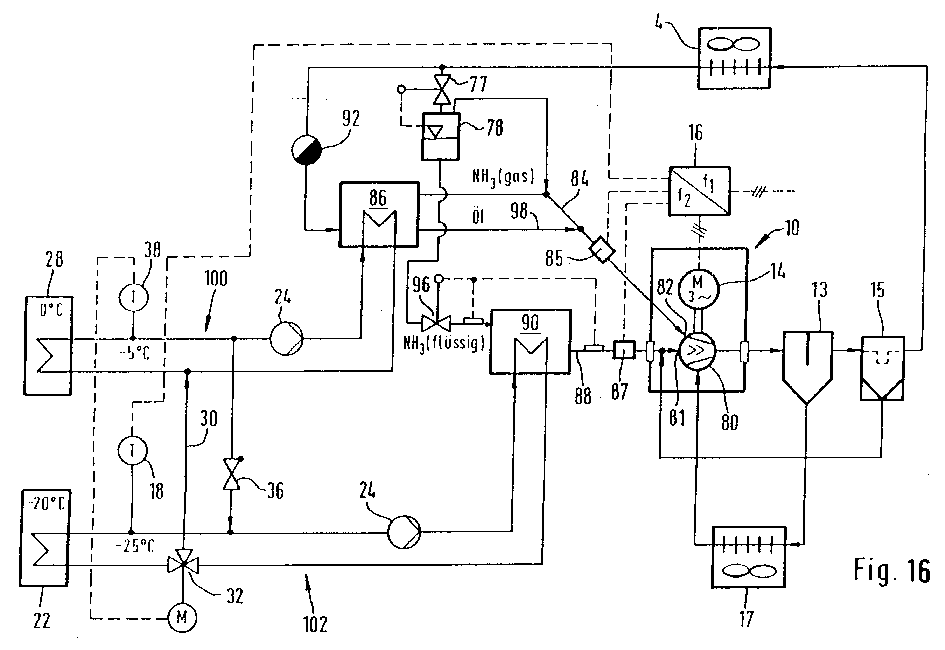

Die in Fig. 16 dargestellte neunte Ausführungsform der Erfindung unterscheidet sich von der in Fig. 15 dargestellten achten Ausführungsform dadurch, daß die Unterkühlung des flüssigen Kältemittels auf andere Weise realisiert wird.

Das flüssige Kältemittel wird über ein Drosselorgan 77 in ein Zwischenexpansionsgefäß 78 geleitet, wobei es unter Abkühlung teilweise verdampft. Das Niveau des flüssigen Kältemittels im Zwischenexpansionsgefäß 78 wird über das Drosselorgan 77 geregelt. Aus dem Zwischenexpansionsgefäß gelangt das flüssige Kältemittel über das Drosselorgan 96 in den Verdampfer 90 für die Tiefkälte, und der gasförmige Anteil wird in die Sauggasleitung 84 zwischen dem Verdampfer 86 für die Normalkälte und dem Verdichter 80 eingeleitet. Wie bei der in Fig. 15 dargestellten achten Ausführungsform der Erfindung wird durch diese Schaltung bei unveränderter Verdichterleistung die Tiefkälteleistung erhöht und die Normalkälteleistung erniedrigt. Vor dem Drosselorgan 96 steht bei dieser Schaltung nur der im Zwischenexpansionsgefäß 78 herrschende Druck an. Dieser Druck liegt nur geringfügig über dem in der Sauggasleistung 84 herrschenden Druck. Zum problemlosen Betrieb eines thermostatischen Expansionsventils reicht dieser Druck möglicherweise nicht aus, so daß in diesen Fällen für das Drosselorgan 96 eine andere Bauart gewählt werden muß.

**Patentansprüche**

1. Kompressor-Kältemaschine mit Ammoniak als Kältemittel, einem Verflüssiger (4), einer Drosseleinrichtung (6), einer Verdampfereinrichtung (8) und einem Motor-Verdichter-Aggregat (10), das einen Elektromotor (14) und einen von dem Elektromotor (14) angetriebenen Verdichter (12) umfaßt, dadurch gekennzeichnet,
daß das Motor-Verdichter-Aggregat (10) in einer halbhermetischen oder hermetischen Kapselung (11) angeordnet ist,
daß der Elektromotor (14) in der (halb)hermetischen Kapselung (11) außerhalb des in den Verdichter (12) einströmenden Sauggasstrom und außerhalb des aus dem Verdichter (12) ausstretenden Druckgasstroms derart angeordnet ist, daß der Elektromotor (14) lediglich einer im wesentlichen ruhenden Ammoniakatmosphäre ausgesetzt ist, und
daß das Motor-Verdichter-Aggregat (10) und die halbhermetische Kapselung (11) aus gegen Ammoniak resistenten bzw. beständigen Materialen besteht.

2. Kältemaschine nach Anspruch 1, dadurch gekennzeichnet, daß die Wicklungen des Elektromotors (14) aus Aluminium bestehen, die insbesondere mittels PTFE ammoniakbeständig isoliert sind.

3. Kältemaschine nach Anspruch 1 oder 2, dadurch gekennzeichnet, daß die Statorwicklungen des Elektromotors (14) verkeilt sind.

4. Kältemaschine nach wenigstens einem der vorhergehenden Ansprüche, dadurch gekennzeichnet, daß die halbhermetische Kapselung (11) einen Behälter umfaßt, der durch einen verschraubbaren Deckel und eine unelastische Flachdichtung, insbesondere aus Graphit, halbhermetisch abdichtbar ist.

5. Kältemaschine nach wenigstens einem der vorhergehenden Ansprüche, dadurch gekennzeichnet, daß der Verdichter (12) zur Kühlung eine Öleinspritzung (13, 15, 17) aufweist.

6. Kältemaschine nach wenigstens einem der vorhergehenden Ansprüche, dadurch gekennzeichnet, daß das Motor-Verdichter-Aggregat (10) durch eine außerhalb der halbhermetischen Kapselung (11) angeordnete Kühleinrichtung (17) gekühlt ist.

7. Kältemaschine nach wenigstens einem der vorhergehenden Ansprüche, dadurch gekennzeichnet, daß das Motor-Verdichter-Aggregat (10) so angeordnet ist, daß sich der Motor (14) über dem Verdichter (12) befindet.

8. Kältemaschine nach wenigstens einem der vorhergehenden Ansprüche, dadurch gekennzeichnet, daß das Motor-Verdichter-Aggregat (10) und die halbhermetische Kapselung (11) auf Saugdrücke unter Umgebungsdruck ausgelegt ist.

9. Kältemaschine nach wenigstens einem der vorhergehenden Ansprüche, dadurch gekennzeichnet, daß der Verdichter (12) ein Verdichter mit mit einem rotierenden Verdichtungselement, insbesondere ein Schraubenverdichter ist.

10. Kältemaschine nach wenigstens einem der vorhergehenden Ansprüche, gekennzeichnet durch einen Sole- bzw. Kälteträgerkreislauf (20) durch die Verdampfereinrichtung (8) und eine Wärmetauschereinrichtung (22).

11. Kältemaschine nach wenigstens einem der vorhergehenden Ansprüche, gekennzeichnet durch eine Einrichtung (16) zur bedarfsgerechten Regelung der Kälteleistung, die eine Drehzahlregelung für das Motor-Verdichter-Aggregat (10) umfaßt.

**12.** Kältemaschine nach Anspruch 11, dadurch gekennzeichnet, daß die Einrichtung (16) zur Regelung der Kälteleistung einen Temperaturfühler zur Erfassung der Kühltemperatur umfaßt und daß diese Kühltemperatur die Regelgröße für die Drehzahlregelung des Motor-Verdichter-Aggregats (10) ist.

**13.** Kältemaschine nach Anspruch 12, dadurch gekennzeichnet, daß der Kühltemperaturfühler die Solerücklauftemperatur erfaßt.

**14.** Kältemaschine nach wenigstens einem der vorhergehenden Ansprüche, dadurch gekennzeichnet, daß die Drosseleinrichtung (6) ein elektronisches Expansionsventil ist.

**15.** Kältemaschine nach wenigstens einem der Ansprüche 1 bis 13, dadurch gekennzeichnet, daß die Drosseleinrichtung (6) ein Hochdruckschwimmerabscheider ist.

**16.** Kältemaschine nach wenigstens einem der vorhergehenden Ansprüche, dadurch gekennzeichnet, daß wenigstens ein zweiter Kälteträgerkreislauf (26) vorgesehen ist, der Sole mit einem höheren Temperaturniveau als die Sole in dem ersten Kälteträgerkreislauf (22) führt, wobei dem zweiten Kälteträgerkreislauf Kälteleistung durch Zumischung von kälterer Sole aus dem ersten Kälteträgerkreislauf zugeführt wird.

**17.** Kältemaschine nach Anspruch 16, dadurch gekennzeichnet, daß die Zumischung von Sole aus dem ersten Kälteträgerkreislauf (22) zu dem zweiten Kälteträgerkreislauf (26) durch die Solerücklauftemperatur im zweiten Kälteträgerkreislauf (26) geregelt ist.

**18.** Kältemaschine nach wenigstens einem der vorhergehenden Ansprüche, dadurch gekennzeichnet, daß die Verdampfereinrichtung einen zweiten Verdampfer aufweist, durch den gasförmiges Kältemittel auf einem Druck- bzw. Temperaturniveau bereitstellbar ist, das über dem Druck- bzw. Temperaturniveau des ersten Verdampfers liegt, und daß jedem Verdampfer ein eigener Kälteträgerkreislauf zugeordnet ist.

**19.** Kältemaschine nach Anspruch 18, gekennzeichnet durch eine Schalteinrichtung mittels dem der erste und zweite Verdampfer abwechselnd mit dem Sauganschluß des Verdichters verbindbar ist.

**20.** Kältemaschine nach Anspruch 19, dadurch gekennzeichnet, daß die Zuschaltung des ersten oder zweiten Verdampfers an den Sauganschluß des Verdichters durch die Temperatur im Solerücklauf des zugeordneten Kälteträgerkreislaufs geregelt ist.

**21.** Kältemaschine nach Anspruch 19 oder 20, dadurch gekennzeichnet, daß die Anzahl der Umschaltungen und/oder die Dauer der Anschaltung der einzelnen Kälteträgerkreisläufe zur Drehzahlregelung und damit zur Regelung der Gesamtkälteleistung verwendet wird.

**22.** Kältemaschine nach Anspruch 18, dadurch gekennzeichnet, daß der Verdichter einen ersten und wenigstens einen zweiten Sauganschluß aufweist, wobei der Saugdruck des ersten Sauganschlusses niedriger als der Saugdruck des zweiten Sauganschlusses ist, und daß der erste Verdampfer mit dem ersten Sauganschluß und der zweite Verdampfer mit dem zweiten Sauganschluß verbunden ist.

**23.** Kältemaschine nach Anspruch 22, dadurch gekennzeichnet, daß der erste und zweite Verdampfer zwischen Verflüssiger (4) und Verdichter parallel geschaltet sind.

**24.** Kältemaschine nach Anspruch 22, dadurch gekennzeichnet, daß der erste und zweite Verdampfer hintereinander geschaltet sind.

**25.** Kältemaschine nach wenigstens einem der Ansprüche 22 bis 24, dadurch gekennzeichnet, daß die Drehzahlregelung über die Soletemperatur, insbesondere die Solerücklauftemperatur des Kälteträgers erfolgt, der Kälteleistung auf dem tiefsten Temperaturniveau bereitstellt, und daß die Verteilung der Kälteleistung zwischen den einzelnen Kälteträgerkreisläufen durch Variation des Volumenstroms in der Saugleitung mit dem tiefsten Saugdruck erfolgt, wobei diese Variation durch die Soletemperatur in dem Kälteträgerkreislauf mit Kälteleistung auf dem höheren Temperaturniveau geführt ist.

**26.** Kältemaschine nach Anspruch 25, dadurch gekennzeichnet, daß diese Variation durch Ansteuerung der Drosseleinrichtung (96) vor dem ersten Verdampfer (90) erfolgt.

**27.** Kältemaschine nach Anspruch 25, dadurch gekennzeichnet, daß diese Variation mittels einer Drosselklappe im Saugstrom des ersten Verdampfers erfolgt.

Fig. 1

Fig. 2

Fig. 3

Fig. 4

Kühlstellentemperatur T = - 5°C ( Pluskälte )

| Konzept | $Q_0$ (kW) | $T_{Luft}$ (°C) | $\varepsilon_K$ | $\eta_{el}$ | $P_{KT}$ (kW) | $\Sigma P_{el}$ (kW) | Gew. faktor | Wa (kWh/a) |
|---|---|---|---|---|---|---|---|---|
| Direktver- dampfung + Ein-Aus- Regelung | 5 | 20 (Innenraum) | 1,9 | 0,9 | -- | 2,9 | 0,5 | 48360 |
| | 10 | | 1,95 | | | 5,7 | 0,25 | |
| | 20 | | 2,1 | | | 10,6 | 0,25 | |
| Kälteträger kreislauf + Drehzahl- regelung | 5 | 7,5 (Jahresmittel München) | 3,7 | 0,8 | 1 | 2,69 | 0,5 | 38281 |
| | 10 | | 3,7 | 0,8 | | 4,4 | 0,25 | |
| | 20 | | 3,5 | 0,85 | | 7,7 | 0,25 | |

Fig. 5

EP 0 710 807 A2

Fig. 6

Fig. 7

EP 0 710 807 A2

Fig. 8

Fig. 9

Fig. 10

Fig. 12

NH₃(gas)

NH₃(flüssig) +Öl

Fig. 11

EP 0 710 807 A2

19

Fig. 13

Fig. 14

Fig. 15

Fig. 16